# EUROPÄISCHE PATENTANMELDUNG

(11) **EP 2 653 802 A2**
(43) Veröffentlichungstag der Anmeldung: **23.10.2013**
(21) Anmeldenummer: 13001581.1
(22) Anmeldetag: 27.03.2013
(51) Int. Cl.: F24J 2/46, F24J 2/40

(54) **Vorrichtung zur Steuerung der Absorption eines Sonnenkollektors**

(30) Priorität: 31.03.2012 DE 102012006520
(71) Anmelder: Jakob, Gerhard, 14827 Wiesenburg/Mark OT Medewitz (DE); Lüdecke, Fredi, 14827 Wiesenburg/Mark OT Reetz (DE)
(72) Erfinder: Jakob, Gerhard, 14827 Wiesenburg/Mark OT Medewitz (DE); Lüdecke, Fredi, 14827 Wiesenburg/Mark OT Reetz (DE)

(57) **Zusammenfassung**

Die Erfindung betrifft eine Vorrichtung zur Steuerung der Absorption der Globalstrahlung eines Sonnenkollektors. Der Vorrichtung liegt die Aufgabe zu Grunde, die Globalstrahlungsaufnahme des Kollektors zu verbessern, die Wärmeumwandlung zu optimieren und auch einen wirksamen Überhitzungsschutz zu schaffen.

## Beschreibung

Die Erfindung betrifft eine Vorrichtung zur Steuerung der Absorption eines Sonnenkollektors

Bei Solarkollektoren besteht die Gefahr der Überhitzung bei starker Sonneneinstrahlung. Bei dem Solarkollektor gemäß DE 10 2009 009 258 A1 wird die Überhitzung dadurch vermieden, dass die Wärmetauscherflüssigkeit in einen Vorratsbehälter abgelassen werden kann.
Der Erfindung liegt die Aufgabe zu Grunde, die Strahlungsaufnahme des Kollektors zu verbessern, die Wärmeumwandlung zu optimieren und auch einen wirksamen Überhitzungsschutz zu schaffen.
Diese Aufgabe wird durch die Merkmale des Anspruchs 1 gelöst.
Vorteilhafte Weiterbildungen der Erfindung sind in den Unteransprüchen gegeben.

### Ausführungsbeispiel:

Im Folgenden wird eine Ausführungsform der Erfindung an Hand der Zeichnungen beschrieben.
Figur 1 zeigt eine Ansicht, einer aus mehreren Kammern bestehenden Stegplatte als Absorber.
Figur 3 bis Figur 6 zeigen den Aufbau, die Anordnung und Lagerung der Absorberkörper.
Figur 7 zeigt eine Solaranlage mit dem erfindungsgemäßen Sonnenkollektor.

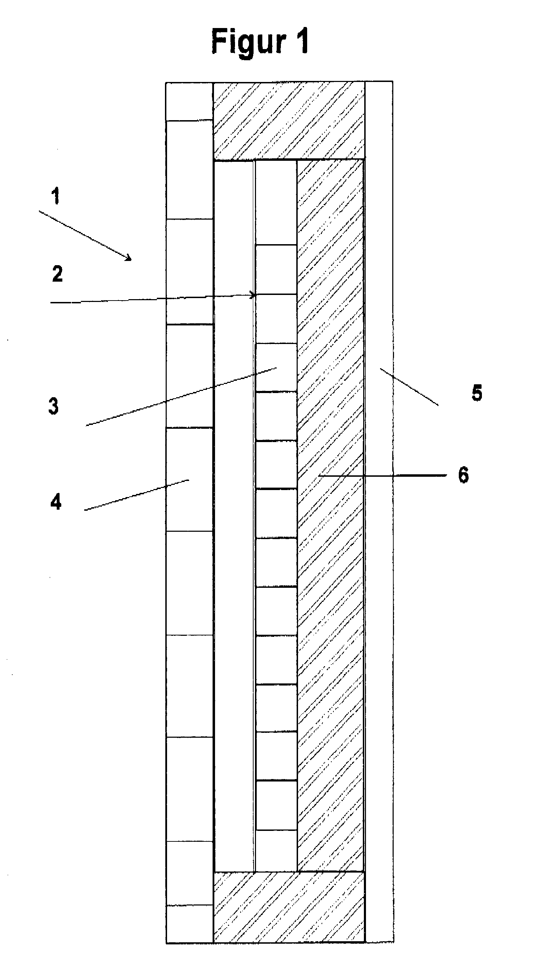

Der Sonnenkollektor 1 gemäß Figur 1 besteht aus einem Absorber 2, mit einer zwischen 2 Platten gebildeten Kammer 3, welche von einer
Wärmetauscherflüssigkeit durchströmbar ist, transparenten Abdeckung 4 aus Acrylglas, einer Stützplatte 5 und einer Wärmedämmung 6.

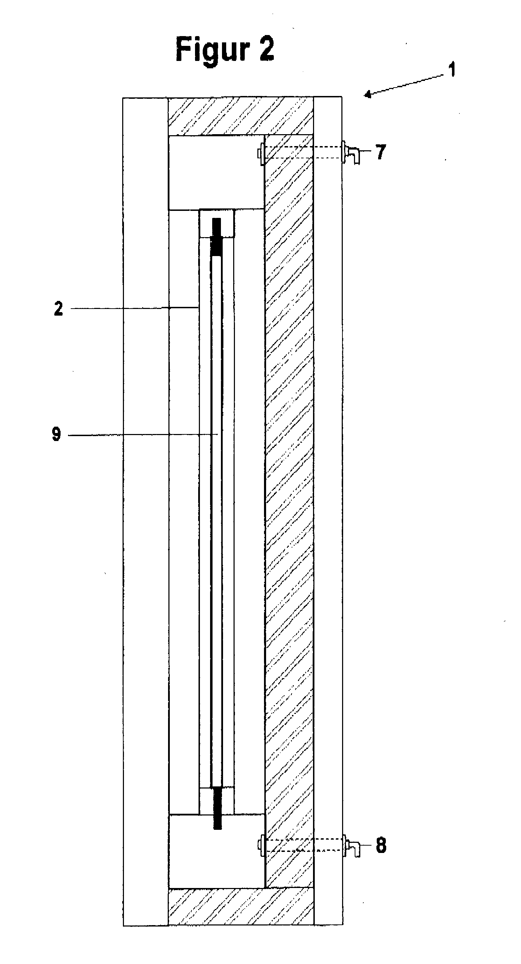

Die Figur 2 zeigt eine Seitenansicht des erfindungsgemäßen Sonnenkollektors 1 mit dem Absorber 2, in welchem Absorberkörper 9 schwenkbar angeordnet sind.
In der Figur 2 ist auch der Einlauf 7 und der Auslauf 8 für die Wärmetauscherflüssigkeit dargestellt.

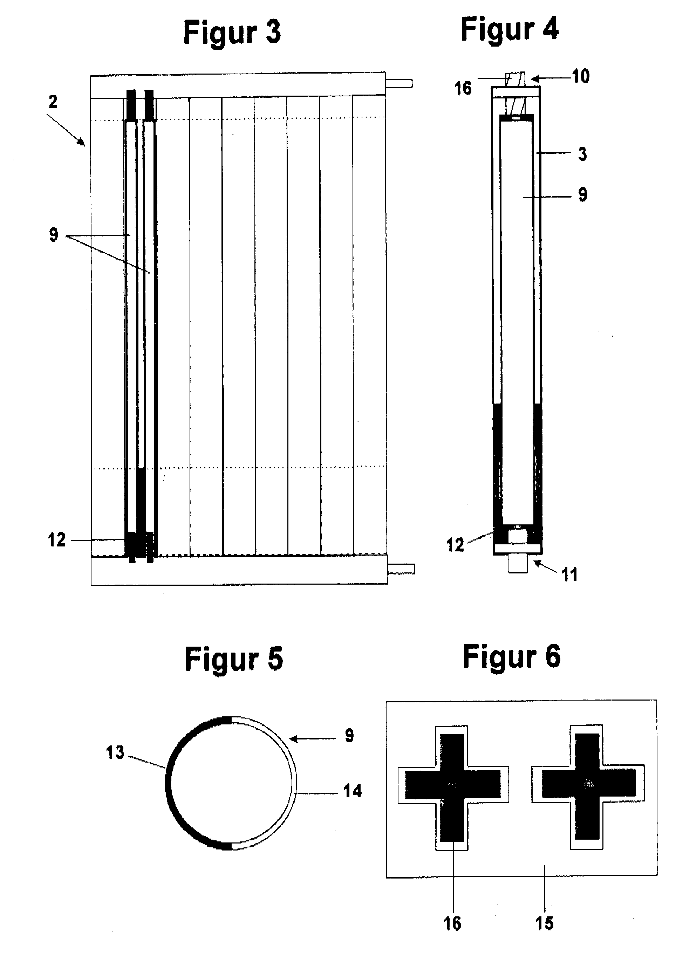

Die Funktion der erfindungsgemäßen Vorrichtung zur Steuerung der Absorption eines Sonnenkollektors ist den Figuren 3 bis 6 entnehmbar.

In der Figur 3 sind lediglich 2 der Absorberkörper 9 dargestellt.
Der Sonnenkollektor 1 ist mit einem Winkel von größer als 0° gegenüber der Horizontalen aufgestellt, so das sich bei Inbetriebnahme der Pumpe die Wärmetauscherflüssigkeit 12 im unteren Bereich des Absorbers 2 aufstaut. Der Abfluss ist mit einer Drossel versehen. Die Drossel kann beispielsweise, wie in Figur 4, durch das Lagerspiel der unteren Führung 11 gebildet sein.

Wie die Figur 5 zeigt, ist der Absorberkörper 9 am Umfang auf der einen Hälfte mit einer Absorptionschicht 13 beschichtet. Auf der gegenüberliegenden Hälfte kann eine Reflexionsschicht 14 aufgebracht sein. In den Figuren 4 und 6 ist insbesondere die obere Führung 10 des Absorberkörpers 9 dargestellt, welche aus einer Kulisse 15 und einer darin bewegbaren wendelartigen Spindel 16 besteht.

Wenn der Sonnenkollektor 1 und damit auch die Pumpe des Solarkreislaufes außer Betrieb ist, entleert sich der Absorber 2 und der Absorberkörper 9 geht in seine untere Ausgangsposition zurück.
Dabei wird der Absorberkörper durch die Spindel so gedreht, dass seine unbeschichtete bzw. mit der Reflexionschicht 14 beschichtete Oberfläche der Strahlungseintrittsseite des Kollektors zugewandt ist.
Damit wird eine übermäßige Erhitzung, des vorzugsweise aus Kunststoff bestehenden Absorbers 2, vermieden.

Bei Inbetriebnahme der Pumpe füllt sich die Kammer 3 mit Wärmetauscherflüssigkeit 12, so dass der Absorberkörper 9, dessen Dichte kleiner als die der Wärmetaucherflüssigkeit 12 ist, bis zu einem oberen Anschlag aufschwimmt und durch die Spindel um 180° gedreht wird, so dass die Absorberschicht 13 der Einstrahlungseite des Sonnenkollektors 1 zu gewandt ist.

Der Neigungswinkel des Sonnenkollektors 1 gegen über der Horizontalen muss hier so bemessen sein, dass die Auftriebskraft des Absorberkörpers 9 die Reibungskräfte in den Führungen 10 und 11 übersteigt.

Die von der Absorberschicht 3 aufgenommene Wärme wird mittels der Wärmetauscherflüssigkeit einem Wärmespeicher oder anderen Verbrauchern zugeführt. Wenn im Sonnenkollektor 1 eine Temperatur überschritten wird, bei der ein sicherer Betrieb des Kollektors nicht mehr möglich ist, kann dieser durch einfaches Abschalten der Pumpe des Solarkreislaufes entleert und durch wegdrehen der Absorptionschicht 13 geschützt werden.

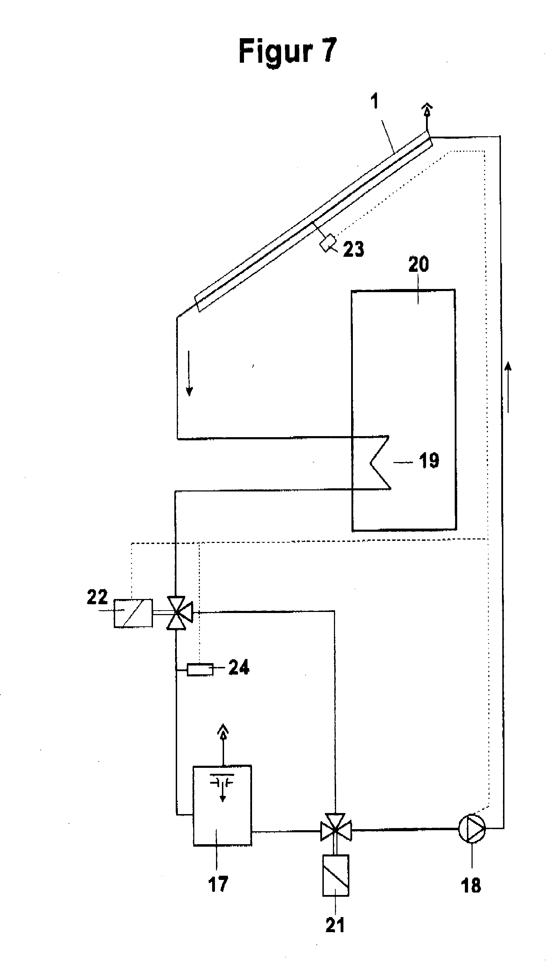

Der gesamte Solarkreislauf ist in Figur 7 dargestellt. Die Wärmetauscherflüssigkeit wird aus einem Vorratsbehälter 17, mittels einer Pumpe 18 durch einen gegenüber der Horizontalen senkrecht oder schräg angeordneten Sonnenkollektor 1 geleitet. Die Wärmetauscherflüssigkeit gelangt anschließend durch den Wärmetauscher 19, eines Wärmespeichers 20 über 2-Wege Ventile 21 und 22, entweder im geschlossenen Kreislauf zur Pumpe 18 oder im offenen Kreislauf zum Vorratsbehälter 17.

Die Solaranlage wird durch eine nicht dargestellte Regeleinrichtung gesteuert.
Die Messwerte, eines am Sonnenkollektor 1 angebrachten Temperatursensors 23 und eines im Fluidkreislauf angeordneten Durchflussmessers 24, werden ausgewertet.

### Bezugzeichenliste

| | | | |
|---|---|---|---|
| 1 | Solarkollektor | | |
| 2 | Absorber | | |
| 3 | Zwischen zwei Platten gebildete, von einem Wärmeträger durchströmbare Kammern | | |
| 4 5 6 | transparente Abdeckung aus Acrylglas Stützplatte Wärmedämmung | 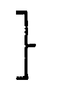 | Gehäuse |
| 7 | Einlauf | | |
| 8 | Auslauf | | |
| 9 | Absorberkörper | | |
| 10 | obere Führung | | |
| 11 | untere Führung | | |
| 12 | Wämetauscherflüssigkeit | | |
| 13 | Absorberschicht | | |
| 14 | Reflexionsschicht | | |
| 15 | Führungskulisse | | |
| 16 | Spindel | | |
| 17 | Vorratsbehälter | | |
| 18 | Pumpe | | |
| 19 | Wärmetauscher | | |
| 20 | Wärmespeicher | | |
| 21 | 2-Wege Ventil | | |
| 22 | 2-Wege Ventil | | |
| 23 | Temperatursensor | | |
| 24 | Durchflussmesser | | |

## Patentansprüche

1. Vorrichtung zur Steuerung der Absorption eines Sonnenkollektors (1), wobei der Sonnenkollektor (1) in einem größeren Winkel als 0°, bevorzugt größer 20°, gegenüber der Horizontalen aufgestellt ist.
Der Sonnenkollektor (1) weist einen Absorber (2) auf, der eine von einer Wärmetauscherflüssigkeit (12) durchströmbare Kammer (3) bildet, in weicher mindestens ein Absorberkörper (9) angeordnet ist.
Die Dichte des Absorberkörpers (9) muss kleiner als die Dichte der Wärmetauscherflüssigkeit (12) sein. Der Absorberkörper (9) ist in einer oberen Führung (10) und einer unteren Führung (11) dreh- und verschiebbar gelagert. Eines der Lager weist eine Führungskulisse (15) und eine wendelartige Spindel (16) auf, so dass eine zur Hälfte des Umfangs des Absorberkörpers (9) aufgebrachte Absorberschicht (13) der Einstrahlungsseite des Sonnenkollektors (1) zugewandt ist, wenn der Absorberkörper (9) in der Wärmetauscherflüssigkeit (12) aufschwimmt und der Einstrahlungsseite des Sonnenkollektors (1) zugewandt ist.
Bei fehlender Wärmetauscherflüssigkeit (12) steht der Absorberkörper (9) an einem unteren Anschlag der Kammer (3) an.

2. Vorrichtung nach Anspruch 1 **dadurch gekennzeichnet, dass** der Absorberkörper (9) auf der Absorberschicht (13) gegenüber liegenden Seite eine Reflexionsschicht (14) aufweist.

3. Vorrichtung nach einer der vorhergehenden Ansprüche **dadurch gekennzeichnet, dass** die aus der Kammer (3) ablaufende Wärmetauscherflüssigkeit (13) durch eine Drossel strömt.

4. Vorrichtung nach einer der vorhergehenden Ansprüche **dadurch gekennzeichnet, dass** der Absorber (2) eine Mehrkammer-Stegplatte aus Polykarbonat ist.

5. Vorrichtung nach einer der vorhergehenden Ansprüche **dadurch gekennzeichnet, dass** der Sonnenkollektor (1) eine transparente Abdeckung aus Acrylglas aufweist.

6. Solaranlage mit einer Vorrichtung gemäß einem der vorstehenden Ansprüche **dadurch gekennzeichnet, dass** im Solarkreislauf ein Vorratsbehälter (17) vorgesehen ist, in welchen die Wärmetauscherflüssigkeit (12) abgelassen werden kann.
